# EUROPÄISCHE PATENTSCHRIFT

(11) **EP 0 576 886 B1**
(45) Veröffentlichungstag und Bekanntmachung des Hinweises auf die Patenterteilung: **16.04.1997**
(21) Anmeldenummer: 93109255.5
(22) Anmeldetag: 09.06.1993
(51) Int. Cl.: G01B 9/02

(54) **Laserinterferometrische Messanordnung für mehrere Messstellen**
Laser interferometric measurement systems for a plurality of measuring stations
Système de mesure à interférométrie laser pour plusieurs points de mesure

(30) Priorität: 03.07.1992 DE 4221851
(43) Veröffentlichungstag der Anmeldung: 05.01.1994
(73) Patentinhaber: JENOPTIK Aktiengesellschaft, D-07743 Jena (DE)
(72) Erfinder: Rothhardt, Manfred, D-6900 Jena (DE); Seide, Wolfgang, D-6900 Jena (DE); Sander, Hendrik, D-6902 Jena (DE)

(56) Entgegenhaltungen:
- EP-A- 0 144 546
- DE-A- 4 028 051
- DE-A- 4 031 291
- US-A- 4 729 653

## Beschreibung

Die Erfindung betrifft eine laserinterferometrische Meßanordnung für mehrere Meßstellen, vorzugsweise zur Messung von Längen als Mehrfach- oder Mehrkoordinatenmessung, die nach dem Heterodynverfahren arbeitet.

Die von Lasern erreichten hohen Lichtleistungen lassen es vorteilhaft erscheinen, mehrere Interferometer als Meßsysteme von einer Lichtquelle zu versorgen. Der Einsatz von Festkörperlasern, beispielsweise von Laserdioden, bietet dabei neben dem Vorteil der hohen Lichtleistung bei ausreichenden Kohärenzlängen die Möglichkeit zum Aufbau kleiner, robuster und im praktischen Einsatz gegen Störungen unempfindlicher Systeme.
Die bei Festkörperlasern im Vergleich zu Gaslasern geringe Frequenzstabilität steht bisher dem Einsatz in der interferometrischen Meßtechnik entgegen.

Häufig werden in Mehrfach- oder Mehrkoordinatenmeßsystemen Heterodyninterferometer eingesetzt, bei denen ein Interferometerarm mit einem Strahlenbündel der ersten Frequenz und der zweite Interferometerarm mit einem Strahlenbündel der zweiten Frequenz betrieben werden. Nach Durchlaufen des Meßweges werden beide Strahlenbündel polarisationsgleich überlagert und die Phasenverschiebung des mit der Differenzfrequenz periodischen Interfrequenzsignals zu der eines Referenzsignals, das durch eine Überlagerung der Strahlenbündel beider Frequenzen vor der Aufteilung auf die beiden Interferometerarme als Interferenzsignal erzeugt wird, verglichen.
Außerdem werden in derartigen Interferometern als Lichtquelle üblicherweise Gaslaser verwendet. Die für die heterodyne Signalauswertung erforderlichen zwei Lichtfrequenzen mit einem definierten Frequenzabstand sind senkrecht zueinander polarisiert. Sie ergeben sich im Gaslaser durch eine Zeemann-Aufspaltung, durch die Verwendung zweier Moden, die ebenfalls senkrecht zueinander polarisiert sind (DE 9101392, EP 0249564, EP 0461773, EP 0431792) oder durch den Einsatz akustooptischer Modulatoren und Drehen der Polarisationsrichtung (EP 019494, EP 0448751).
Die Interferometerteiler sind deshalb Polarisationsteiler, in den Interferometerarmen wirken zwei unterschiedliche Frequenzen. Das bedingt einerseits eine kurze und unbedingt gemeinsame Strahlführung beider Lichtfrequenzen von einem ersten Überlagerungspunkt zum Erzeugen der Bezugsphasenlage bis zum Interferometerteiler, um störende Phasendifferenzen zu vermeiden und den Einfluß von Brechzahlschwankungen durch Veränderungen der Umgebungsbedingungen gering zu halten, andererseits wirken sich Längenänderungen in beiden Interferometerarmen infolge der abweichenden Wellenlängen unterschiedlich aus, die Interferometerarme sind nicht gleichwertig. Zur Erzeugung der Interferenzsignale müssen beide Lichtfrequenzen die gleiche Polarisationsrichtung besitzen, wozu zusätzliche Mittel zur Änderung der Polarisationsrichtung in den Interferometerarmen benötigt werden.

Die DE 40 28 051 A1 offenbart ein Gitterinterferometer, bei dem mindestens zwei hintereinandergeschaltete Beugungsgitter mehrfach genutzt werden und das auch als unpolarisiertes heterodynes Interferometer einsetzbar ist. Dabei wird durch die teilweise Reflexion am zweiten Gitter der Referenzreflektor eingespart. Eine Kompensation von Umwelteinflüssen ist damit nicht möglich.

Trotz der hohen Frequenzstabilität der Gaslaser erfordern genaue Messungen die Korrektur der von der Brechzahl im Meßmedium abhängigen aktuellen Wellenlänge, die entweder in der Messung von Temperatur, Druck und Feuchte, in der Anwendung eines zusätzlichen Interferometers als Refraktometer (DE 3401900, EP 0422155) oder als Meßgerät für eine Bezugsstrecke (DE 2929945, EP 0290789) und der daraus folgenden Berechnung der Wellenlänge besteht. Dieser Aufwand schränkt bisher die Anwendung laserinterferometrischer Mehrstellenmeßanordnungen erheblich ein.

In der nicht vorveröffentlichten Schrift DE-A- 4100773 ist bereits eine Interferometeranordnung für eine Meßstelle vorgeschlagen worden, bei der zwei gekoppelte Interferometer oder ein Dreistrahlinterferometer eingesetzt werden, in denen Referenzreflektoren der Interferometerarme in einem definierten Abstand voneinander an einem ortsfest auf einem Meßgerät befestigten Längenbezugsnormal angeordnet sind.
Dadurch wird ein von den Schwankungen der Lichtfrequenz und Veränderungen der Umweltbedingungen unabhängiger metrologischer Anschluß der Messung hergestellt.
Die Anwendung dieser Anordnung gleichzeitig für mehrere Meßstellen ist jedoch immer noch aufwendig und besitzt den bereits genannten Nachteil, den voneinander abweichende Wellenlängen in den Interferometerarmen verursachen.

Aufgabe der Erfindung ist es, eine Mehrstellenmeßanordnung aus kompakten Interferometern mit vergleichsweise geringem Aufwand und kleinen Abmessungen aufzubauen, in der Störgrößen, wie Änderungen der Brechzahl im Meßmedium und Frequenzschwankungen der Laserlichtquelle das erzielte Meßergebnis weitestgehend unbeeinflußt lassen.

Erfindungsgemäß wird die Aufgabe bei einer laserinterferometrischen Meßanordnung für mehrere Meßstellen, bei der Paare von Strahlenbündeln unterschiedlicher Frequenzen den Meßstellen zugeordneten Interferometern zugeleitet werden, in deren Interferometerarmen Meß- und Referenzreflektoren angeordnet sind, und die mit einer Auswerteelektronik gekoppelte Empfangseinrichtungen für Heterodyn-Interferenzsignale besitzen, dadurch gelöst, daß die den Interferometern zugeleiteten Paare von Strahlenbündeln untereinander gleich sind, das Interferometer mindestens einer Meßstelle zwei Referenzreflektoren mit einem festen, definierten Abstand zueinander aufweist, und daß in jedem Interferometer für jedes Strahlenbündel ein Quellort zur Erzeugung von Teilstrahlenbündeln vorgesehen ist, die bei zumindest abschnittsweise gleicher Ausbreitungsrichtung einander zugeordnet sind, und von denen jedes Teilstrahlenbündel der einen Frequenz nach seinem Durchlaufen eines Interferometerarms einen gemeinsamen Strahlengang mit dem zugeordneten Teilstrahlenbündel der anderen Frequenz zur Bildung der Heterodyn-Interferenzsignale besitzt, die für alle Interferometer gleichzeitig gemessen und ausgewertet werden.

Mit der Ankopplung der Wellenlänge an ein Längenbezugsnormal für mindestens eine Meßstelle wird jede Messung in der Meßanordnung unabhängig von Brechzahländerungen in einem homogenen Meßmedium. Die Interferometer werden von einer Lichtquelle versorgt, in allen Armen der Interferometer wirkt Laserlicht der gleichen Frequenz. Typische Schwankungen der Frequenz, beispielsweise beim Einsatz von Laserdioden, verfälschen das Meßergebnis nicht, da mit der gleichzeitigen Messung und Auswertung für alle Interferometerarme eine gleiche aktuelle Wellenlänge vorliegt.

Die Erfindung soll nachstehend anhand der schematischen Zeichnung näher erläutert werden. Es zeigen:
- Fig. 1: den Prinzipaufbau eines dreiarmigen Heterodyn- Interferometers, das mindestens an einer Meßstelle eingesetzt wird
- Fig. 2: eine Mehrstellenmeßanordnung für drei Meßstellen

In den Strahlengängen zweier Strahlenbündel 1, 2, die vorzugsweise einer gemeinsamen Laserlichtquelle (nicht dargestellt) entstammen und voneinander verschiedene, engbenachbarte Frequenzen f₁, f₂ besitzen, sind nacheinander Beugungsgitter 3, 4 und ein Strahlteiler 5 angeordnet, dessen Teilerflächen 5.1 und 5.2 jeweils einem der Strahlengänge 1, 2 zugeordnet sind. Aus beiden Strahlenbündeln 1, 2 am Beugungsgitter 3 erzeugte Teilstrahlenbündel werden am Beugungsgitter 4 parallelisiert. Die Beugungsgitter 3, 4 können auf entgegengesetzten Flächen eines transparenten Trägers aufgebracht sein.

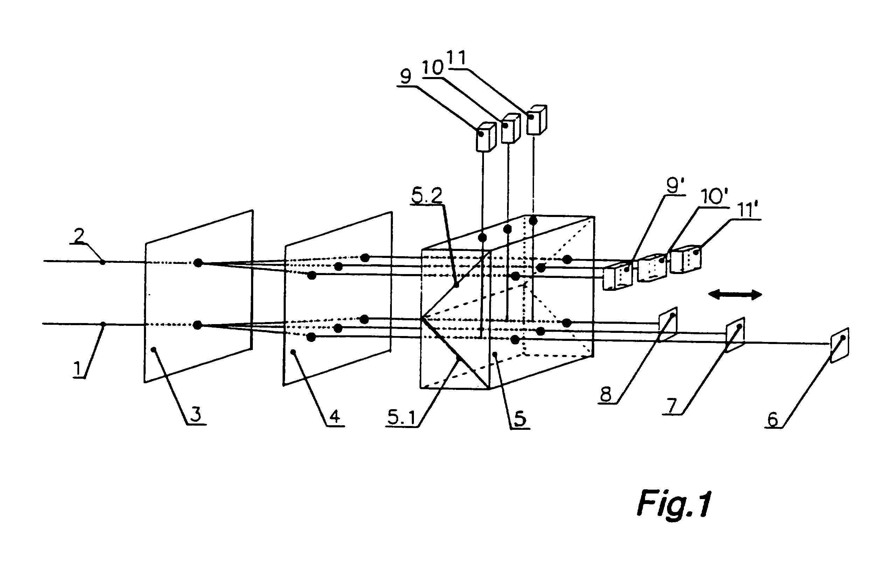

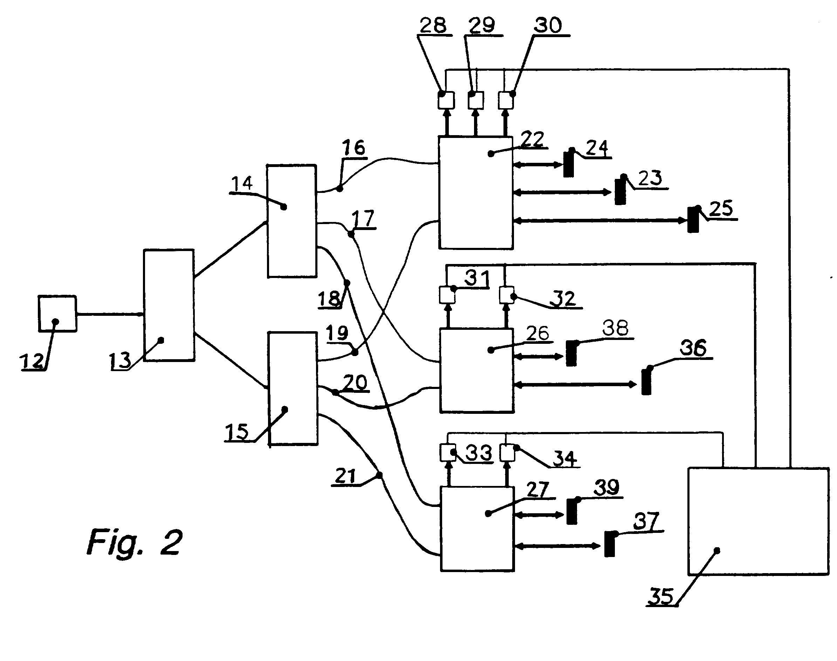

Jedes der Teilstrahlenbündel der ersten Frequenz f₁ wird nach seinem Austritt aus dem Strahlteiler 5 von einem Reflektor 6, 7 oder 8 eines Interferometerarms wieder auf die Teilerfläche 5 gerichtet und bildet nach seiner Umlenkung ab der Teilerfläche 5.2 mit einem der Teilstrahlenbündel der zweiten Frequenz f₂ zur Interferenzbildung einen gemeinsamen Strahlengang bis zu einem der Photoempfänger 9, 10 oder 11. Während der Reflektor 7 als Meßreflektor verschiebbar in Strahlrichtung ausgebildet ist, sind die beiden anderen ortsfest und in einem definierten Abstand zueinander angeordnet.
Eine nichtdargestellte, mit den Photoempfängern 9, 10, 11 gekoppelte Einheit dient der Auswertung der Phasendifferenz zwischen den Überlagerungssignalen, wobei der Vergleich immer zwischen dem Überlagerungssignal aus einem Interferometerarm mit einem festen Reflektor 6 oder 8 und dem Interferometerarm mit dem verschiebbaren Reflektor 7 erfolgt.
Die Lage des Nullpunktes bei dieser Auswertung wird an den Ort gelegt, an dem der Reflektor 7 jeweils mit einem der Reflektoren 6 oder 8 einen gleichen Abstand zur Teilerfläche 5.1 besitzt. Eine andere Möglichkeit der Anordnung der Photoempfänger ist in gestrichelter Weise und mit den Bezeichnungen 9', 10' und 11' dargestellt.
Bei der Mehrstellenmeßanordnung gemäß Fig. 2 sind im Strahlengang zweier Strahlenbündel mit Frequenzen f₁, f₂ einer Zweifrequenzlaserlichtquelle, die aus einer Laserdiode 12 und einem akusto-optischen Modulator 13 besteht, Strahleiler 14, 15 angeordnet, die in Verbindung mit Lichtleitfasern 16, 17, 18, 19, 20 und 21 jeder Meßstelle ein Paar von Strahlenbündeln mit den Frequenzen f₁ und f₂ zur Verfügung stellen. Für eine erste Meßstelle ist ein dreiarmiges Interferometer 22 mit einem Meßreflektor 23 und zwei Referenzreflektoren 24, 25 vorgesehen, die durch ihren festen und definierten Abstand zueinander eine Ankopplung der Wellenlänge an ein Längenbezugsnormal und damit den metrologischen Anschluß für die Meßanordnung realisieren.
Zwei weiteren Meßstellen sind Interferometer 26, 27 zugeordnet, die dem Prinzipaufbau gemäß Fig. 1 mindestens in der Weise entsprechen, daß nur Teilstrahlenbündel der einen Frequenz in die Interferometerarme gelangen. In den Interferometerarmen der Interferometer 26, 27 sind Meßreflektoren 36, 37 und Referenzreflektoren 38, 39 angeordnet. Der zeitgleichen Messung, die gleiche Wellenlängen in allen Interferometerarmen gewährleistet, dienen als Empfangseinrichtungen Photoempfänger 28, 29, 30 am Interferometer 22 und Photoempfänger 31, 32, 33, 34 an den Interferometern 26, 27. Eine Auswerteelektronik 35 bewertet die Meßergebnisse und berechnet die Meßwerte für jede Meßstelle. Sind die Umgebungsbedingungen für die Meßstellen unterschiedlich, kann es sich erforderlich machen, für mehr als eine Meßstelle Interferometer mit metrologischem Anschluß einzusetzen.
Als Laserlichtquelle ist natürlich auch eine Zweifrequenzlaserlichtquelle verwendbar, für deren austretendes Strahlenbündel zur Frequenztrennung ein Polarisationsteiler vorgesehen ist. Alternativ zur Verwendung von Lichtleitfasern zur Strahlenbündelübertragung läßt sich auch eine Freistrahloptik verwenden.

## Patentansprüche

1. Laserinterferometrische Meßanordnung für mehrere Meßstellen, bei der Paare von Strahlenbündeln unterschiedlicher Frequenzen den Meßstellen zugeordneten Interferometern (22,26,27) zugeleitet werden, in deren Interferometerarmen Meßreflektoren (23,36,37) und Referenzreflektoren (24,25,38,39) angeordnet sind, und die mit einer Auswerteelektronik gekoppelte Empfangseinrichtungen für Heterodyn-Interferenzsignale besitzen, wobei
die den Interferometern (22,26,27) zugeleiteten Paare von Strahlenbündeln untereinander gleich sind, das Interferometer mindestens einer Meßstelle zwei Referenzreflektoren mit einem festen, definierten Abstand zueinander aufweist,
und in jedem Interferometer (22,26,27) für jedes Strahlenbündel ein Quellort zur Erzeugung von Teilstrahlenbündeln vorgesehen ist, die bei zumindest abschnittsweise gleicher Ausbreitungsrichtung einander zugeordnet sind, und von denen jedes Teilstrahlenbündel der einen Frequenz nach seinem Durchlaufen eines Interferometerarms einen gemeinsamen Strahlengang mit dem zugeordneten Teilstrahlenbündel der anderen Frequenz zur Bildung der Heterodyn-Interferenzsignale besitzt, die für alle Interferometer (22,26,27) gleichzeitig gemessen und ausgewertet werden.

## Claims

1. An interferometer laser measuring system for a number of measuring stations, wherein pairs of beams at different frequencies are fed to the measuring stations of associated interferometers (22, 26, 27), measuring reflectors (23, 36, 37) and reference reflectors (24, 25, 38, 39) being disposed in the arms of the interferometers, which comprise receiving devices for heterodyne interference signals, coupled to an evaluating electronic unit, wherein the pairs of beams fed to the interferometers (22, 26, 27) are equal to one another, the interferometer at at least one measuring station has two reference reflectors with a fixed, defined spacing from one to the other, and there is provided in each interferometer (22, 26, 27) for each beam a source for generating component beams which are associated with one another and propagate at least partly in the same direction, each component at one frequency, after passing through one interferometer arm, having a common path of rays with the associated component beam at the other frequency in order to form heterodyne interference signals, which are simultaneously measured and evaluated for all the interferometers (22, 26, 27).

## Revendications

1. Dispositif de mesure par interférométrie laser pour plusieurs points de mesure, dans lequel des paires de faisceaux de rayons, de différentes fréquences, sont dirigées vers des interféromètres (22, 26, 27) associés aux points de mesure, dans les bras desquels sont disposés des réflecteurs de mesure (23, 26, 37) et des réflecteurs de référence (24, 25, 38, 39), et comportant des dispositifs récepteurs, couplés à une logique d'évaluation, pour des signaux d'interférence hétérodyne, caractérisé en ce que les paires, amenées aux interféromètres (22, 26, 27), de faisceaux de rayons sont identiques entre elles, en ce que l'interféromètre d'au moins un point de mesure présente deux réflecteurs de référence, placés avec un espacement mutuel défini fixe, et en ce que, dans chaque interféromètre (22, 26, 27) est prévu pour chaque faisceau de rayons un lieu source, destiné à la génération de faisceaux partiels, associés les uns les autres lorsque la direction de propagation est au moins la même, par tronçons, et dont chaque faisceau de rayons partiel, d'une première fréquence, après son passage dans un bras d'interféromètre, passe dans un trajet de rayon commun avec le faisceau de rayons partiel associé, de l'autre fréquence, pour constituer les signaux d'interférence hétérodyne qui sont mesurés et évalués simultanément pour tous les interféromètres (22, 26, 27).
